# EUROPEAN PATENT APPLICATION

(11) **EP 1 542 117 A1**
(43) Date of publication of application: **15.06.2005**
(21) Application number: 04004454.7
(22) Date of filing: 27.02.2004
(51) Int. Cl.: G06F 1/00

(54) **Binding content to a user**

(30) Priority: 29.10.2003 EP 03024771
(71) Applicant: Sony Ericsson Mobile Communications AB, 221 88 Lund (SE)
(72) Inventor: Andersson, Stefan, 230 41 Klägerup (SE); Larsson, Bo, 217 59 Malmö (SE)
(74) Representative: Dahnér, Christer

(57) **Abstract**

Providing information about digital rights management features in relation to an electronic communication device comprising the steps of:
- in a content providing device (16) providing a downloadable content (42) for a particular user of the communication device (10),
- providing information about digital rights management such as a rights object (RO) 40,
- providing a constraint (43) defining in what way the particular user is allowed to use the content (42) related to the information about digital rights management and
- binding the content (42) to the user by means of information in the constraint (43), or
- binding automatically the information about digital rights management, such as binding content (42) to the user, such that a content provider can ensure that downloaded content only can be used by the intended user, or group of users. A user can be identified by its personal subscriber module (e.g. SIM/USIM/), which ensures secure portability of the user's identity.

## Description

The present invention relates to the field of downloadable content from content providers that is subsequently bound to a user.

There is a trend within the field of tele- and computer communication to be able to download content, for instance different types of media content like music, from different content providers. In this regard, it is necessary that the content is used according to the conditions set out by the content provider. In order to do this the content is often encrypted and provided with a rights object (RO) setting out the terms for the use of the content in question. A user might for instance be allowed to play a piece of music a fixed number of times or within a specified time limit.

One environment in which this can take place is set out for the area of mobile phones by OMA (Open Mobile Alliance), which are setting up a DRM (Digital Rights Management) scheme, "OMA DRM", for handling of such rights objects (RO:s). This scheme sets out a number of supported features, which allows a user to download content and use the content on a portable electronic device such as a cellular phone, to which the content was downloaded under the conditions set out by the content provider. Typically such conditions are controlled by hardware such as a Subscriber Identification Module (SIM) or the like in the portable device.

A possible business model for OMA DRM is to provide a flat rate subscription with unlimited content downloads for a particular user of a portable device. With the present technology there is then a possibility for fraud, which will best be described by a possible example scenario as follows:
1. User A has a flat rate subscription (controlled by the SIM).
2. User A removes his SIM and inserts it into user B's portable device.
3. User A downloads content to user B's portable device.
4. User B removes user A's SIM and instead inserts his SIM into his portable device.
5. User B can now use the content downloaded by user A.

Note that changing SIM is only necessary when SIM authentication is used towards the downloaded service. If username password is used instead, then all user A has to do is to share his password with user B, whereby the steps 2 and 4 described above can be omitted. This leads to the content being able to be used in any portable device, in this particular example in user B's device, which of course is a big disadvantage from the point of view of the content provider.

Thus, in order to safeguard the interests of the content provider it is necessary to provide a fraud prevention (authentication) mechanism for content download. This is however not a simple task, since the authentication mechanism may also be susceptible to other attacks such as cloning attacks.

There is therefore a need to be able to provide fraud prevention that is secure enough without unduly burdening the content provider so that a user can get a higher degree of freedom of where the content is used while at the same time ensuring that the interest of the content provider are safeguarded.

### SUMMARY OF THE INVENTION

According to a first aspect of the present invention, this object is achieved by a method of providing information about digital rights management features in relation to an electronic communication device comprising the steps of:
- in a content providing device providing a downloadable content for a particular user of the communication device,
- providing information about digital rights management such as a rights object,
- providing a constraint defining in what way the particular user is allowed to use the content related to the information about digital rights management and
- binding the content to the user by means of information in the constraint, or
- binding automatically the information about digital rights management, such as binding content to the user, such that the content provider can ensure that content only can be used by the intended user.

Herein, the term "downloadable" is also intended to comprise not only pure "downloadable" content, but also locally stored/provided content provided for the communication device, such as a memory stick, IR or bluetooth provided content.

A second aspect of the present invention is directed towards a method including the features of the first aspect, further comprising the step of:
- providing the constraint to be treated and enforced as an integrated part of the digital rights management information.
   A third aspect of the present invention is directed towards a method including the features of the first or the second aspect, wherein the content is bound in the content providing device.
   A fourth aspect of the present invention is directed towards a method including the features of the first aspect, wherein the content is bound automatically in the communication device.
   A fifth aspect of the present invention is directed towards a method including the fourth aspect, wherein the rights object (RO) is bound to a personal indentification module such as a SIM or USIM, when the right object (RO) first arrives in the communication device.
   A sixth aspect of the present invention is directed towards a method including the features of the fifth aspect, wherein the rights object (RO) is always bound to the SIM.
   Another object of the present invention is to provide a method of generating rights objects (ROs) for provision to an electronic communication device that allows secure portability of the user's identity.
   According to a seventh aspect of the present invention, this object is achieved by a method of generating rights objects (RO) for provision to an electronic communication device comprising the steps of:
   in a content providing unit,
      - receiving a request for content,
      - generating a rights object (RO) for the content, said rights object (RO) comprising a constraint defining in what way the particular user is allowed to use the content related to the information about digital rights management and
      - binding the content to the user by means of information in the constraint, such that the content provider can ensure that content only can be used by the intended user.

   An eight aspect of the present invention is directed towards a method including the features of the first or the seventh aspect, wherein the RO is bound to a group of personal indentification modules, such as SIMs.
   A ninth aspect of the present invention is directed towards a method including the features of the eight aspect, wherein wild card character(s) is/are used to denote IMSI values.
   Another object of the present invention is to provide an electronic communication device for communication with a content provider that allows fraud protection.
   According to a tenth aspect of the present invention, this object is achieved by an electronic communication device for communication with a content provider and comprising:
   - a digital rights management control unit arranged to provide
      a digital rights management scheme associated with the phone,
   - a media content store, and
   - an application unit connected to the media content store for the user of the device to be able to use content that has been downloaded to the media content store, wherein the digital rights management control unit is arranged to use a constraint defining in what way the particular user is allowed to use the content related to the information about digital rights management that is bound to the downloadable content a rights object (RO), such that the content provider can ensure that content only can be used by the intended user.

An eleventh aspect of the present invention is directed towards an electronic communication device including the features of the tenth aspect, wherein the digital rights management control unit is arranged to use a constraint that has been bound to a RO in the content providing unit.

A twelfth aspect of the present invention is directed towards an electronic communication device including the features of the tenth aspect, wherein the digital rights management control unit is arranged to use a constraint that has been automatically bound to a rights object (RO) in the device itself.

A thirteenth aspect of the present invention is directed towards an electronic communication device including the features of the tenth aspect, wherein the rights object (RO) is arranged to be bound to the SIM even if not indicated by the constraint.

A fourteenth aspect of the present invention is directed towards an electronic communication device including the features of the tenth aspect, wherein it is a portable communication device.

A fifteenth aspect of the present invention is directed towards an electronic communication device including the features of the tenth aspect, wherein it is a mobile phone.

Another object of the present invention is to provide a content providing device for generating rights objects (ROs) to electronic communication devices that allows fraud protection.

According to a sixteenth aspect of the present invention this object is achieved by a content providing device for generating rights objects (ROs) to electronic communication devices and arranged to:
from an electronic communication device,
   - receive a request for content, and
   - generate a rights object (RO) for the content, said rights object (RO) being bound to SIM by server, defining in what way the particular user is allowed to use the content related to the information about digital rights management, such that the content provider can ensure that content only can be used by the intended user.

Another object of the present invention is to provide a system for managing digital rights that allows fraud protection.

According to a seventeenth aspect of the present invention, this object is achieved by a system for managing digital rights comprising:
an electronic communication device for communication with a content providing unit and comprising:
   - a digital rights management control unit arranged to provide a digital rights management scheme associated with the device,
   - a media content store, and
   - an application unit connected to the media content store for the user of the device to be able to use content that has been downloaded to the media content store, wherein the digital rights management control unit is arranged to use a constraint defining in what way the particular user is allowed to use the content related to the information about digital rights management that is added to the downloadable content a right object, and a content providing device for generating rights objects (ROs) to electronic communication devices and arranged to:
   from the electronic communication device,
   - receive a request for content, and
   - generate a rights object (RO) for the content, said rights object (RO) comprising a constraint defining in what way the particular user is allowed to use the content related to the information about digital rights management, such that the content provider can ensure that content only can be used by the intended user.

Another object of the present invention is to provide a computer program product for providing information about supported digital rights management features in relation to an electronic communication device that allows fraud protection.

Another object of the present invention is to provide a computer program product for generating rights objects for provision to an electronic communication device that allows binding content to a user that allows fraud protection.

According to an eighteenth aspect of the present invention, this object is achieved by a computer program product for generating rights objects (ROs) for provision to an electronic communication device comprising a computer readable medium having thereon:
computer program code means, to make a computer execute, when said program element is loaded in the computer:
   generate a rights object (RO) for the content, said rights object comprising a constraint defining in what way the particular user is allowed to use the protected content, such that the content provider can ensure that content only can be used by the intended user.

The invention has the following advantages. It allows that the content provider can ensure that downloaded content only can be used by the intended user, or group of users. A user can be identified by its personal subscriber module (e.g. SIM/USIM/), which ensures secure portability of the user's identity.

The content provider is provided with a means to either explicitly bind the protected content to a particular user, or choose to automatically bind the content to the user downloading/purchasing the content.

The invention allows the content provider to deploy user-oriented business models as opposed to device-oriented models, which is used as of today. This makes it possible for the user to download content to several devices, and use the content on those devices, while the content provider's business interests are protected since other users are prevented from making use of the content.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a block schematic of a system according to the invention including an electronic communication device and a content providing device according to the invention,
fig. 2 shows a block schematic of an electronic communication device according to the invention,
fig. 3 shows a block schematic of a content providing device according to the invention, and
fig. 4 schematically shows the sending of a request for content from the electronic communication device and the delivery of the requested content from the content providing device.

### DETAILED DESCRIPTION OF EMBODIMENTS

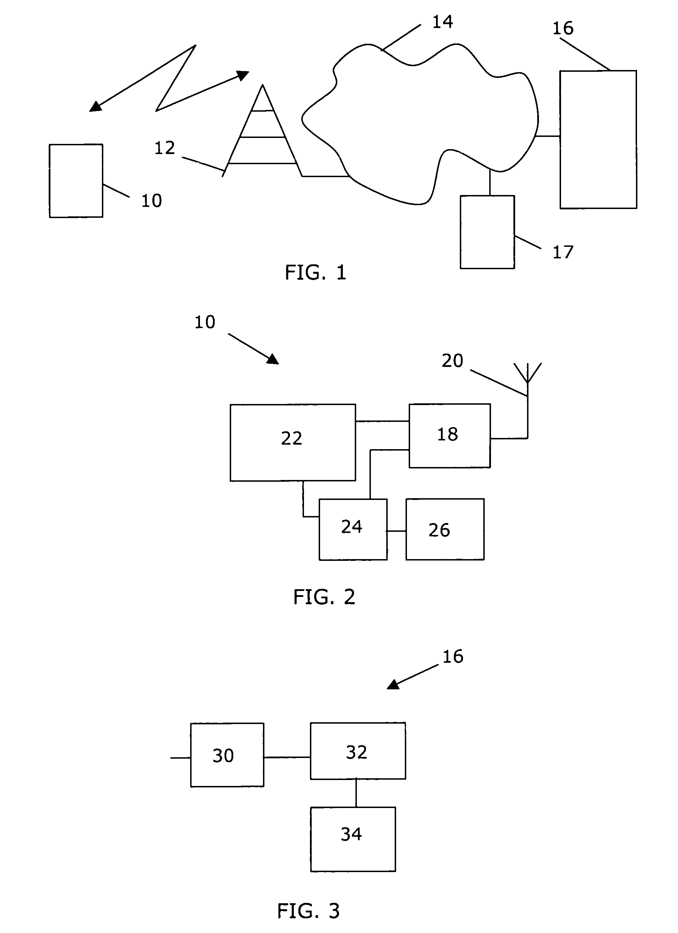

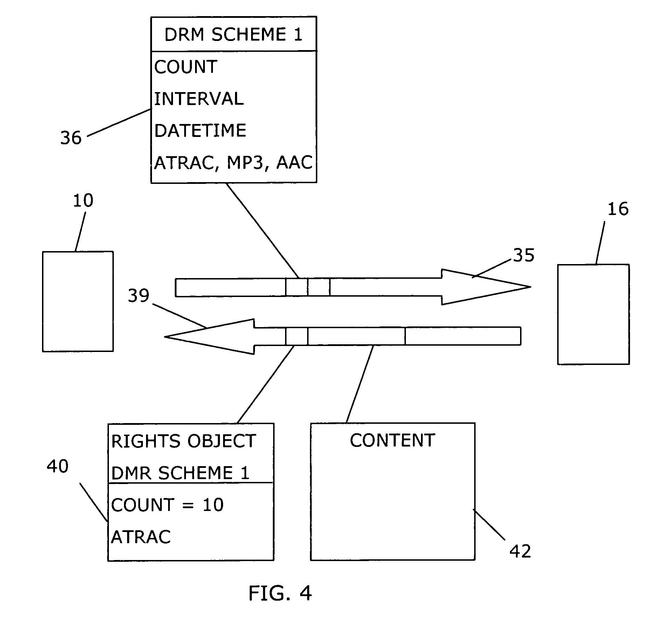

A system according to an embodiment of the invention will now be described in relation to fig. 1, 2, 3 and 4. An electronic communication device in the form of a mobile phone 10 is communicating with a content providing device 16 via a cellular network 14 having a base station 12. The phone 10 downloads content from the content providing device 16, which can be in the form of different types of media files, like video, sound or still pictures according to different types of formats that the phone 10 can handle. When the user downloads this content it is provided together with information about DRM, typically information comprising a RO 40, comprising a constraint 43 which among other things define in what way the user is allowed to use the content such that content is bound to a particular user and fraud can be prevented. Preferably, the constraint is arranged to be treated and enforced as an integrated part of a conventional DRM framework.

In order to allow binding content to a user the phone 10 includes the units of fig. 2, which figure shows a block schematic of relevant parts of the phone 10 and to which figure reference is now being made. The phone 10 thus includes a transmitting unit 18 arranged to communicate with the network of fig 1 via an antenna 20. The transmitting unit 18 is connected to a digital rights management control unit 22, whereby a digital rights management scheme is associated with the phone. The transmitting unit 18 is also connected to a media content store 24. The digital rights management control unit 22 is also connected to the store 24. An application unit 26 is connected to the media content store 24 in order for the user of the device to be able to use content that has been downloaded to the media content store 24. In this way the application unit 26 can replay the content, which is bound to the particular user thereof, preferably by means of binding the constraint to the IMSI on the SIM. There is a strong risk that the interests cannot be protected if the authentication is not based on some reasonably secure element such as a hardware element such as a SIM.

To further enhance flexibility of the digital rights management scheme, preferably it shall be possible to bind the RO to a group of SIMs, for instance such that SIM personaliztion categories are employed, as will be explained briefly below:
- bind to network, MCC and MNC digits of the IMSI
- bind to network subset, digit 6-7 of the IMSI
- bind to service provider, GID 1 and MCC and MNC digits of the IMSI
- bind to corporate, GID 2 and MCC and MNC digits of the IMSI
- bind to SIM, entire IMSI

This could be put into REL syntax for instance as follows:

Preferably, the syntax for the IMSI and GID1 values can be further enhanced by allowing wildcard characters such as ? and *.

It is also possible to always automatically bind the RO to the SIM even if this is not indicated by the constraint in the RO. For a solution where the REL has to be unchanged, this would be the preferred solution. Alternatively, it is also possible to always bind to SIM, which is indicated in the RO.

Alternatively, if the RO transmission is not considered secure enough to hide the IMSI value, this could be achieved by inserting a hash of the IMSI instead of the actual value. However, it should be noted that this prevents the use of wildcard characters since the hash values must match exactly.

It may also be necessary to consider how non-compliant phones will react, since they may ignore the constraint. One solution to this could be to provided some kind of filter means, arranged not send ROs to such non-compliant phones.

It should be understood that the phone 10 includes many other and more units than the ones described in order to make and receive phone calls and to perform other functions not related to downloaded content. They are however not related to the present invention and have therefore been omitted for easier understanding of the invention. The way the different media content stores, application unit, communication unit and digital rights management unit are interconnected and described above is just an example of how the invention can be implemented. It should be realised that the configuration and the functions can be modified and varied in many ways.

Fig. 3 shows a block schematic of the relevant part of the content providing device 16 according to the invention. This includes a communication unit 30, a content provision control unit 32 and a content store 34. The content provision control unit 32 is connected to both the communication unit 30 and the content store 34.

The functioning of the system will now be described, starting with "client based enforcement".

The content provision control unit 32 then retrives the lists from the server 17 using the reference received from the phone, and creates or generates a rights objects RC for the content, which rights object RO includes the constriant 43. Alternatively, the constraint 43 is added to the RO automatically by the digital rights management control unit 22 (or any other DRM agent) in the phone 10.

The content provision control unit 32 retrieves the content 42 from the content store 34 possibly encrypted and otherwise performs encryption of the content. The content 42 and the RO 40 including the constraint are then transferred in a reply signal 39 from the content provider 16 to the phone 10, using the communication unit 30. Here the content 42 may be encrypted and the phone 10 receives decryption keys in some suitable manner in order to be able to actually replay the content. In a preferred embodiment the keys for such decryption are provided in the RO 40. The content 42 and the RO 40 were provided together to the phone 10 in the embodiment described above. It should however be realised that they can just as well be provided separately.

The content 42 and the RO 40 are then received by the transmitting unit 18 of the phone 10 and then stored in store 24 under the control of the digital rights management control unit 22. In this way the application unit 26 can replay the content, which is bound to the particular user thereof, preferably by means of binding the constraint 43 to the IMSI on the SIM.

### Server based fraud detection

If SIM based authentication is used it may be possible to introduce network based fraud prevention mechanisms instead.

One such solution is to fetch the IMEI from the HLR each time a user requests a new RO. In this way, the service could detect if a user downloads content to several phones. Apparent fraudsters could then be blocked from using the service.

The different control units are preferably provided in the form of one or more processors with associated program memories, which perform the various method steps according to the invention. The stores are preferably provided as normal memories. The communication units are preferably provided in the form of normal communication circuits, like for instance ASIC circuits.

The program code might furthermore also be downloaded into either the phone or the content provider server or both from an external server.

The invention was furthermore presented in relation to mobile phones. It should however be realised that it can be provided on several other types of devices, such as communicators, electronic organizers, smartphones, palm top computers, lap top computers or even on PCs. Similarly the communication network used need not be a cellular network, but can be any suitable communication network. Thus the present invention is only to be limited by the following claims.

## Claims

1. A method of providing information about digital rights management features in relation to an electronic communication device comprising the steps of:
- in a content providing device (16) providing a downloadable content (42) for a particular user of the communication device (10),
- providing information about digital rights management such as a rights object (RO) 40,
- providing a constraint (43) defining in what way the particular user is allowed to use the content (42) related to the information about digital rights management and
- binding the content (42) to the user by means of information in the constraint (43), or
- binding automatically the information about digital rights management, such as binding content (42) to the user, such that the content provider can ensure that content only can be used by the intended user.

2. The method according to claim 1, comprising the step of:
- providing the constraint (43) to be treated and enforced as an integrated part of the digital rights management information.

3. The method according to claim 1 or 2, wherein the constraint (43) is bound in the content providing device (16).

4. The method according to claim 1 or 2, wherein the constraint (43) is bound automatically in the communication device (10).

5. The method according to claim 4, wherein the right object (RO) is bound to a personal indentification module, such as a SIM or USIM, when the right object (RO) first arrives in the communication device (10).

6. The method according to claim 1, wherein the right object (RO) is always bound to the SIM.

7. A method of generating rights objects (40) for provision to an electronic communication device (10) comprising the steps of:
in a content providing unit (16),
- receiving a request for content (35),
- generating a rights object (40) for the content, said rights object (40) comprising a constraint (43) defining in what way the particular user is allowed to use the content (42) related to the information about digital rights management and
- binding the content (42) to the user by means of information in the constraint (43) such that the content provider can ensure that content only can be used by the intended user.

8. The method according to claim 1 or 7, wherein the rights object (40) is bound to a group of SIMs.

9. The method according to claim 8, wherein wild card character(s) is/are used to denote IMSI values.

10. Electronic communication device for communication with a content provider providing a downloadable content (42) for a particular user of the communication device (10) and comprising:
- a digital rights management control unit (22) arranged to provide
a digital rights management scheme associated with the phone,
- a media content store (24), and
- an application unit (26) connected to the media content store (24) for the user of the device (10) to be able to use content that has been downloaded to the media content store (24), wherein the digital rights management control unit (22) is arranged to use a constraint (43) defining in what way the particular user is allowed to use the content (42) related to the information about digital rights management that is bound to the downloadable content (42), such that the content provider can ensure that content only can be used by the intended user.

11. Electronic communication device according to claim 10, wherein the digital rights management control unit (22) is arranged to use a constraint (43) that has been bound to a right object (40) in the content providing unit (16) .

12. Electronic communication device according to claim 10, wherein the digital rights management control unit (22) is arranged to use a constraint (43) that has been automatically bound to a rights object (40) in the device (10) itself.

13. Electronic communication device according to claim 12, wherein the rights object (40) is arranged to be bound to the SIM even if not indicated by the constraint (43).

14. Electronic communication device according to claim 13, wherein it is a portable communication device.

15. Electronic communication device according to claim 14, wherein it is a mobile phone.

16. Content providing device for generating rights objects to electronic communication devices and arranged to:
from an electronic communication device (10),
- receive a request for content (35), and
- generate a rights object (40) for the content, said rights object (40) comprising a constraint (43) defining in what way the particular user is allowed to use the content (42) related to the information about digital rights management, such that the content provider can ensure that content only can be used by the intended user.

17. System for managing digital rights management features in relation to an electronic communication device comprising:
an electronic communication device (10) for communication with a content providing unit (16) and comprising:
- a digital rights management control unit (22) arranged to provide
a digital rights management scheme associated with the device (10),
- a media content store (24), and
- an application unit (26) connected to the media content store (24) for the user of the device (10) to be able to use content that has been downloaded to the media content store (24), wherein the digital rights management control unit (22) is arranged to use a constraint (43) defining in what way the particular user is allowed to use the content (42) related to the information about digital rights management that is bound to the downloadable content (42) a right object (RO), and
a content providing device (16) for generating rights objects (40) to electronic communication devices (10) and arranged to:
from the electronic communication device (10),
- receive a request for content (35), and
- generate a rights object (40) for the content, said rights object (40) comprising a constraint (43) defining in what way the particular user is allowed to use the content (42) related to the information about digital rights management, such that the content provider can ensure that content only can be used by the intended user.

18. Computer program product for providing information about digital rights management features in relation to an electronic communication device (10) comprising a computer readable medium having thereon:
computer program code means, to make the electronic communication device execute, when said program is loaded in the electronic communication device (10):
- transmit a request for content (35) to a content providing device (16), to
- generate a rights object (40) for the content, said rights object comprising a constraint (43) defining in what way the particular user is allowed to use the content (42) related to the information about digital rights, such that the content provider can ensure that content only can be used by the intended user.

19. Computer program product for generating rights objects for provision of an electronic communication device (10), having:
computer program code means, to make a computer execute, when said program element is loaded in the computer:
- generate a rights object (40) for the content, said rights object comprising a constraint (43) defining in what way the particular user is allowed to use the content (42) related to the information about digital rights management, such that the content provider can ensure that content only can be used by the intended user.
